# FASCICULE DE BREVET EUROPEEN

(11) **EP 1 269 431 B1**
(45) Date de publication et mention de la délivrance du brevet: **26.05.2004**
(21) Numéro de dépôt: 01917175.0
(22) Date de dépôt: 19.03.2001
(51) Int. Cl.: G07F 7/12, H04L 9/32

(54) **PROCEDE DE PROTECTION D'UNE PUCE ELECTRONIQUE CONTRE LA FRAUDE**
VERFAHREN ZUM SCHUTZ EINES ELEKTRONISCHEN BAUSTEINES GEGEN BETRUG
METHOD FOR PROTECTING AN ELECTRONIC CHIP AGAINST FRAUD

(30) Priorité: 30.03.2000 FR 0004313
(43) Date de publication de la demande: 02.01.2003
(73) Titulaire: FRANCE TELECOM, 75015 Paris (FR)
(72) Inventeur: GILBERT, Henri, F-91440 Bures-sur-Yvette (FR); GIRAULT, Marc, F-14000 Caen (FR)
(74) Mandataire: Jeune, Pascale
(86) Numéro de dépôt international: PCT/FR2001/000810
(87) Numéro de publication internationale: WO 2001/075821

(56) Documents cités:
- EP-A- 0 409 701
- EP-A- 0 565 279
- EP-A- 0 621 570
- WO-A-97/22093
- DE-A- 4 138 861

## Description

### Domaine de l'invention

La présente invention se rapporte à un procédé de protection d'une puce électronique d'un utilisateur contre la fraude.

L'invention trouve une application très avantageuse en ce qu'elle permet de protéger contre la fraude des puces à circuit intégré à logique câblée ou à microprocesseur, notamment les puces électroniques qui équipent les cartes prépayées utilisées dans des transactions diverses telles que l'établissement de communications téléphoniques, le paiement d'objets dans un distributeur automatique, la location d'emplacements de stationnement à partir d'un parcmètre, le paiement d'un service comme un transport public ou comme la mise à disposition d'infrastructures (péage, musée, bibliothèque, ...).

### Description de l'art antérieur

Actuellement, les cartes prépayées sont susceptibles de subir différents types de fraudes. Un premier type de fraude consiste à dupliquer sans autorisation la carte, le terme clonage étant souvent utilisé pour caractériser cette opération. Un deuxième type de fraude consiste à modifier les données attachées à une carte, en particulier le montant du crédit inscrit dans la carte. Pour lutter contre ces fraudes il est fait appel à la cryptographie, d'une part pour assurer l'authentification de la carte au moyen d'une authentification et/ou pour assurer l'authentification des données au moyen d'une signature numérique et, d'autre part pour assurer la confidentialité des données au moyen d'un chiffrement. La cryptographie met en jeu deux entités, un vérificateur et un objet à vérifier, et elle peut être soit symétrique, soit asymétrique. Lorsqu'elle est symétrique, les deux entités partagent exactement la même information, en particulier une clé secrète, lorsqu'elle est asymétrique une des deux entités possède une paire de clés dont l'une est secrète et l'autre est publique ; il n'y a pas de clé secrète partagée. Dans de nombreux systèmes, seule la cryptographie symétrique est mise en oeuvre avec des cartes prépayées car la cryptographie asymétrique reste lente et coûteuse. Les premiers mécanismes d'authentification développés en cryptographie symétrique consistent à calculer une fois pour toutes un certificat, différent pour chaque carte, à le stocker dans la mémoire de la carte, à le lire à chaque transaction et à le vérifier en interrogeant une application du réseau supportant la transaction où sont stockés les certificats déjà attribués. Ces mécanismes assurent une protection insuffisante. En effet, le certificat peut être espionné, reproduit et rejoué frauduleusement car il est toujours le même pour une carte donnée. Pour tenir compte du nombre faible d'authentification mis en jeu entre deux rechargements dans le cas d'une carte prépayée rechargeable ou, au cours de la durée de vie d'une carte prépayée non rechargeable, les mécanismes d'authentification passifs sont remplacés ou complétés par des mécanismes qui font intervenir une clé secrète à des fins d'authentification ou d'acquittement d'une instruction et/ou à des fins d'authentification de données. La clé secrète, différente pour chaque carte et inscrite initialement dans la carte ou, dans le cas d'une carte rechargeable, réinscrite dans la carte lors d'un rechargement, est utilisée par la carte elle-même pour calculer un certificat lors de chaque authentification.

Un premier de ces mécanismes fait l'objet de la demande FR 89 09734 (FR-A-2 650 097). Le procédé décrit consiste à déterminer une fonction non linéaire, cette fonction étant connue de l'application et implantée dans une puce électronique sous la forme d'un automate d'états. Lors d'une authentification, la puce électronique et l'application calculent un certificat qui est le résultat de la fonction appliquée à une liste d'arguments déterminée à chaque authentification ; la liste d'arguments pouvant comprendre un aléa, l'aléa étant une donnée déterminée par l'application à chaque authentification, une donnée contenue dans la puce électronique et une clé secrète connue de la puce électronique et de l'application. Lorsque le certificat calculé par la puce électronique est identique au certificat calculé par l'application, la puce électronique est jugée authentique et la transaction entre la puce électronique et l'application est autorisée.

Un second mécanisme de protection des cartes par authentification active, faisant appel à une fonction logique basée sur l'utilisation d'un code d'authentification assurant une sécurité inconditionnelle pour un nombre limité d'authentifications, fait l'objet de la demande FR 95 12144 (FR-A-2 739 994) et est également décrite dans l'article « Solutions for Low Cost Authentication and Message Authentication » paru dans les actes de la conférence CARDIS'98. L'utilisation d'une telle fonction logique assure une protection contre le rejeu et une usure contrôlée de la clé secrète. Dans les applications basées sur la carte à mémoire considérées dans le présent brevet, on peut avantageusement faire appel à une fonction logique linéaire dépendant d'une clé secrète et de paramètres comme l'aléa reçu par la carte et le cas échéant des données internes à la carte ou reçues par la carte. La famille de fonctions logiques décrite dans la demande FR 95 12144 constitue un cas particulier particulièrement adapté aux contraintes des cartes synchrones et faisant appel à des calculs de produits scalaires modulo 2 entre vecteurs binaires.

Chacun des deux mécanismes précédemment cités possède des avantages et des inconvénients spécifiques. En ce qui concerne le premier mécanisme, qui repose sur l'hypothèse (non prouvable dans l'état actuel des connaissances) de la sécurité informatique de la fonction non linéaire utilisée, les très fortes contraintes imposées par les capacités de calculs réduites des puces à logique câblée n'autorisent pas une marge de sécurité aussi large que pour les algorithmes à clé secrète usuels et de ce fait la divulgation de la spécification détaillée de la fonction non linéaire utilisée peut représenter un risque. En ce qui concerne le second mécanisme, il possède l'avantage de bénéficier d'une sécurité prouvable tant que le nombre d'authentifications n'excède pas un certain seuil, et il n'y a donc pas de risque lié à la divulgation de la fonction linéaire utilisée mais, par contre la nécessité de limiter strictement le nombre d'utilisations de la fonction d'authentification pour la durée de vie de la puce (ou dans le cas de cartes rechargeables, entre deux rechargements) inhérente à cette solution peut représenter une contrainte difficile à satisfaire pour certaines applications. En outre, des attaques portant non pas sur les puces à logique câblée mais, sur les modules de sécurité utilisés pour la vérification de ces puces et, selon lesquelles un fraudeur fournirait à des modules de vérification des réponses aléatoires jusqu'à ce qu'un nombre suffisant de bonnes réponses, obtenues par hasard, lui fournisse le secret associé à un numéro de carte de son choix, peuvent être plus difficiles à contrer dans le cas du second mécanisme.

### Résumé de l'invention

Aussi, le problème technique à résoudre par l'objet de la présente invention est de proposer un procédé de protection d'une puce électronique d'un utilisateur contre la fraude qui comprend les étapes consistant :
- à déterminer une fonction logique g connue de l'application et implantée dans la puce électronique,
- à attribuer à la puce électronique une première clé secrète K, connue seulement de la puce électronique et de l'application, et gardée secrète dans la puce électronique,
- à chaque authentification de la puce électronique à générer un mot d'entrée variable R appelé aléa,
- à calculer un certificat, par la puce électronique et l'application, le certificat étant le résultat de la fonction logique g appliquée à une liste d'arguments comprenant au moins l'aléa R et la clé secrète K et,
qui assure une sécurité accrue.

Une solution au problème technique posé consiste, selon la présente invention, en ce que ledit procédé comprend en outre les étapes consistant :
- à déterminer une fonction non linéaire f connue de l'application et implantée dans la puce électronique,
- à attribuer à la puce électronique une seconde clé secrète K' connue seulement de la puce électronique et de l'application, et gardée secrète dans la puce électronique,
- à chaque authentification de la puce électronique à déterminer un masque M au moyen de la fonction non linéaire f appliquée à une liste d'arguments contenant au moins une partie de la clé secrète K',
- à masquer la valeur du certificat au moyen du masque M pour rendre disponible à l'application uniquement la valeur du certificat masquée,
- à vérifier par l'application la valeur masquée du certificat calculée par la puce électronique.

Ainsi, le procédé selon l'invention, qui concerne la protection d'une puce électronique contre la fraude dans des transactions entre la puce électronique et une application, masque la valeur du certificat S calculée par la puce électronique, avant que l'application le lise pour en vérifier sa valeur et déterminer si la puce électronique est authentique ; le calcul du certificat S et la détermination du masque M faisant intervenir respectivement, une fonction logique dépendante d'une première clé implantée dans la puce électronique et une fonction non linéaire dépendante d'une seconde clé également implantée dans la puce électronique, les fonctions et les clés étant connues de l'application.

Le procédé conforme à l'invention résout le problème posé car la valeur du certificat S, calculé par la puce électronique, n'est pas disponible en clair mais sous une forme masquée. Par conséquent, le fraudeur ne peut pas simplement intercepter le résultat de calcul échangé entre la puce électronique et l'application et le rejouer ultérieurement. Il lui faut connaître la valeur de la fonction logique et de la première clé qui permettent de calculer le certificat et, la valeur de la fonction non linéaire et de la seconde clé qui interviennent pour déterminer le masque.

L'application vérifie l'exactitude de la valeur masquée soit, après avoir calculé les valeurs du certificat et du masque M, à masquer au moyen du masque M la valeur du certificat et à comparer cette valeur masquée à celle calculée par la puce électronique soit, en démasquant le certificat masqué calculé par la puce électronique au moyen de la fonction inverse du masque et en comparant la valeur démasquée à la valeur du certificat calculé par l'application. Lorsque les valeurs comparées sont identiques, la puce électronique est jugée authentique et la transaction entre la puce électronique et l'application est autorisée.

De manière avantageuse, un mode particulier de mise en oeuvre permet d'assurer simultanément l'authentification de la carte et l'authentification de données en faisant intervenir la valeur de certaines données dans le calcul du certificat. Dans un premier cas, ces données peuvent être mémorisées dans la puce électronique et être constituées par le numéro de la puce électronique ou par un crédit associé à la puce électronique. Dans un second cas, ces données sont écrites dans la puce électronique par l'application lors de l'opération d'authentification.

Bien qu'il soit préférable d'utiliser des clés K et K' indépendantes, il peut exister un lien de dépendance sous la forme d'une fonction qui permet de calculer la clé K' à partir de la clé K. L'attribution des clés à une puce électronique est effectuée, soit lors de la personnalisation de la puce en fin de fabrication, soit lors d'une opération de rechargement de la puce électronique dans le cas d'une puce électronique rechargeable.

Selon un autre mode particulier de mise en oeuvre, la détermination des clés K et K' peut être effectuée par l'application d'une méthode de diversification ayant pour arguments d'entrée le numéro de la puce électronique et un code secret maître, ce qui permet avantageusement à l'application de reconstituer les clés secrètes de chaque puce électronique après lecture du numéro de la puce ; aucun stockage des clés secrètes des puces n'est alors nécessaire.

Selon un autre mode particulier de mise en oeuvre, la clé K est un mot d'un nombre déterminé de bits regroupés en séquences K[i], chaque séquence K[i] ayant un nombre de bits égal au nombre de bits des arguments d'entrée autre que la clé K et pris comme un tout et, la fonction logique g consiste à effectuer des produits scalaires modulo 2 entre chacun des bits d'une séquence déterminée K[i] et les bits des arguments d'entrée autre que la clé K.

La fonction non linéaire f peut avoir comme arguments d'entrée soit la clé K', soit l'aléa R, soit des données D internes à la puce électronique, soit des données D' fournies à la puce électronique par l'application, soit une combinaison de ces derniers ; chaque argument ajoutant une difficulté à surmonter pour le fraudeur.

Selon un autre mode particulier de mise en oeuvre, l'aléa R est déterminé par l'application à partir d'un nombre aléatoire généré par l'application et l'aléa R est transmis à la puce électronique par l'application.

Selon un autre mode particulier de mise en oeuvre, l'aléa R est déterminé à partir d'une suite d'entiers consécutifs générés par l'application (2) et par la puce électronique.

Selon un autre mode particulier de mise en oeuvre, la fonction non linéaire f a en outre comme arguments d'entrée au moins un paramètre c dépendant de l'état de la puce électronique au moment de l'authentification. Selon une première variante à ce mode, la valeur du paramètre c est calculée à partir d'au moins la valeur d'un compteur contenu dans la puce électronique et incrémenté à chaque authentification. Selon une seconde variante à ce mode, la valeur du paramètre c est calculée à partir, d'au moins la valeur d'un compteur contenu dans la puce électronique et incrémenté à chaque authentification et, de l'aléa R.

Selon un autre mode particulier de mise en oeuvre, le masquage du certificat au moyen du masque M est calculé au moyen d'une fonction de chiffrement, en particulier une opération OU Exclusif bit à bit.

Selon un autre mode particulier de mise en oeuvre, le nombre d'authentifications de la puce électronique est limité à une valeur maximale V déterminée par l'application et inscrite dans la puce électronique. Selon une variante à ce mode, la puce électronique contient un compteur incrémenté à chaque authentification et, la puce électronique cesse tout calcul d'authentification lorsque la valeur du compteur atteint la valeur maximale V.

### Brève description des dessins

D'autres caractéristiques et avantages de l'invention apparaîtront lors de la description qui suit faite en regard de dessins annexés de modes particuliers de réalisation donnés à titre d'exemples non limitatifs.

La figure 1 est un schéma d'un procédé selon l'invention.

La figure 2 est un schéma d'une fonction non linéaire f.

### Description d'un mode de réalisation

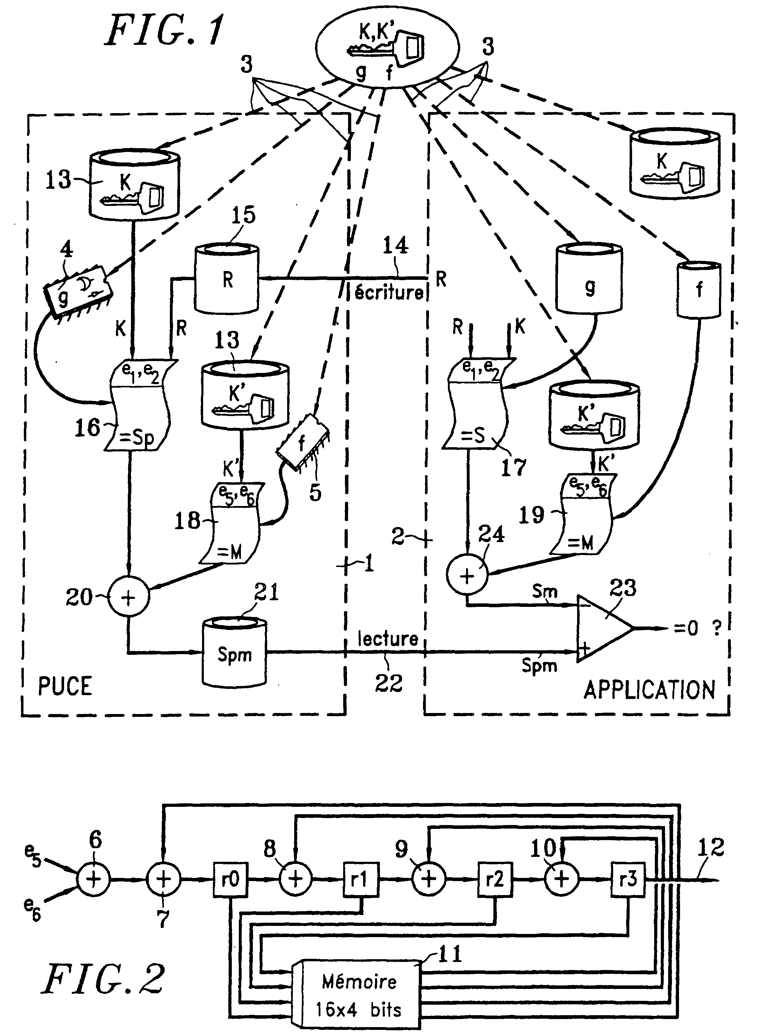

La figure 1 représente schématiquement un procédé selon l'invention, de protection d'une puce électronique 1 d'un utilisateur contre la fraude dans des transactions entre une application 2 et la puce électronique 1.

L'application 2 peut être entièrement ou partiellement délocalisée dans un terminal en libre service non surveillé, tel un téléphone public ou tel un tourniquet d'accès à un transport public. L'utilisateur détient une puce électronique 1, implantée par exemple sur une carte prépayée, qui doit lui permettre d'établir une transaction avec l'application 2. Ces transactions peuvent consister en l'établissement de communications téléphoniques, le paiement d'objets dans un distributeur automatique, la location d'emplacement de stationnement à partir d'un parcmètre, le paiement d'un service comme un transport public ou comme la mise à disposition d'infrastructures.

Le procédé permet d'authentifier la puce électronique 1. La puce électronique 1 est personnalisée au moment de sa fabrication et, éventuellement lors d'une opération de rechargement, au moyen d'un numéro d'identité i et d'une valeur initiale d'une donnée D liée à l'application à laquelle elle est destinée ; la valeur D représente généralement le crédit attaché à la puce électronique 1 pour une application 2 donnée.

Le procédé consiste, lors de cette opération de personnalisation ou, lors d'une opération préalable à la commercialisation de la puce électronique 1, à déterminer les conditions initiales nécessaires à l'authentification, soit de la puce électronique 1, soit de l'application 2. Ces conditions initiales comprennent la détermination 3 d'une fonction logique g, d'une fonction non linéaire f, d'une première clé secrète K et d'une seconde clé secrète K'. La fonction logique g est connue de l'application 2 et est implantée dans la puce électronique 1 sous la forme de circuits logiques 4 tels des circuits « ou », « ou exclusif », « et », « non et », ...

La fonction non linéaire f peut être implantée sous la forme d'un circuit 5 formé d'une succession de registres formant un registre à décalage, associés à une mémoire et à des opérateurs ou exclusifs ; une telle fonction est dite « automate d'états » et un exemple est représenté à la figure 2. Suivant cet exemple, la fonction f consiste en un premier opérateur ou exclusif 6, un registre à décalage 4 bits comprenant quatre bascules r0 à r3 et quatre opérateurs ou exclusifs 7 à 10 et, en une mémoire 11 de taille 16x4 bits. Chaque opérateur ou exclusif 6 à 10 a deux entrées et une sortie. Chaque bascule r0 à r3 a une entrée de données, deux sorties de données et une entrée horloge non représentée. La mémoire 11 a quatre entrées et quatre sorties et une entrée horloge non représentée. Les arguments d'entrée e₅,e₆ qui comprennent, selon ce mode de réalisation, au moins une partie de la seconde clé secrète K' et l'aléa R sont présents sur une des entrées du premier opérateur ou exclusif 6. La sortie du premier opérateur ou exclusif 6 est connectée à la première entrée du deuxième opérateur ou exclusif 7. L'entrée des bascules r0, r1, r2 et r3 est connectée à la sortie d'un opérateur ou exclusif 7 à 10. La première sortie des bascules r0, r1 et r2 est connectée à une première entrée d'un opérateur ou exclusif 8 à 10. La seconde sortie des bascules r0, r1, r2 et r3 est connectée à une entrée de la mémoire 11. La seconde entrée des opérateurs ou exclusifs 7 à 10 est connectée à une sortie de la mémoire 11. La première sortie de la bascule r3 donne la valeur du masque M calculée par la fonction f appliquée aux arguments e₅, e₆ qui comprennent, selon ce mode de réalisation, au moins une partie de la seconde clé secrète K' et l'aléa R. A chaque authentification de la puce électronique 1 ou, de l'application 2, correspond un nombre de coups d'horloge égal au nombre de bits des arguments d'entrée ; les bits du masque M sortent en série à chaque coup d'horloge sur la sortie 12.

La première clé K, généralement attribuée de manière individuelle à une puce électronique, consiste typiquement en un mot de quelques dizaines à quelques milliers de bits ; ce mot est connu de l'application et est gardé secret dans la puce électronique 1. Cependant, selon un mode particulier de réalisation du procédé, l'application ne mémorise pas la clé K elle-même mais un secret dit maître. Ce secret maître est tel qu'il permet de reconstituer, par une méthode dite de diversification, la clé K à partir du numéro i d'identité de la puce.

Quel que soit le mode de réalisation du procédé, la clé K est typiquement conservée dans la puce dans une mémoire 13 morte telle une PROM. En particulier, lorsque la puce électronique 1 est de type rechargeable, c'est le cas d'une puce implantée sur une carte prépayée à rechargement, la mémoire morte est aussi accessible en écriture, telle une EEPROM.

La seconde clé K' se présente comme la clé K, sous la forme d'un mot d'un certain nombre de bits. Les clés K et K' sont mémorisées dans la puce, typiquement dans la même mémoire 13 à des adresses différentes, mais la détermination des bits de K' (respectivement K) peut, dans certains cas, dépendre de la clé K (respectivement K').

Après l'opération de personnalisation, la puce électronique 1 est commercialisée et l'utilisateur peut entreprendre une transaction avec une application 2. Le procédé d'authentification, illustré par le schéma de la figure 1, consiste à authentifier la puce électronique 1 par l'application 2.

Dans une première étape du procédé, l'application génère un mot R appelé aléa. Le mot R comprend un nombre de bits déterminé pour éviter toute tentative frauduleuse de rejeu ; typiquement le nombre de bits est de l'ordre de quelques dizaines de bits. Le mot R est généré à l'aide d'un générateur aléatoire ou d'un générateur pseudo aléatoire. Dans un mode particulier de réalisation, les mots R successivement générés peuvent consister en une suite d'entiers consécutifs. Le mot R est un argument d'entrée pour le calcul du certificat S. Pour que la puce électronique 1 ait accès au mot R, l'application 2 effectue une écriture 14 dans la puce 1 ou la puce 1 vient lire le mot R dans l'application 2. L'échange entre la puce 1 et l'application 2 peut s'effectuer suivant un protocole établi lors de la personnalisation de la puce 1 ; la valeur R peut, par exemple, être codée. Le mot R est stocké temporairement dans une mémoire tampon 15 de la puce électronique 1, ainsi que dans l'application 2.

Dans une deuxième étape du procédé, l'application 2 d'une part et, la puce 1 d'autre part, calculent 16, 17 un certificat noté respectivement S et Sp. Le certificat S, respectivement Sp, est le résultat du calcul effectué par la fonction logique g appliquée à une liste d'arguments e₁,e₂ qui comprend au moins l'aléa R et la clé K. Dans des modes particuliers de réalisation du procédé, la liste d'arguments e₁,e₂ comprend en outre, le numéro i d'identité de la puce électronique 1 ou, une ou plusieurs données D contenues dans la puce électronique 1 ou, une ou plusieurs données D' générées par l'application et écrites dans la puce électronique 1 avant authentification ou, une combinaison des arguments précédents.

Dans une troisième étape, le procédé consiste à déterminer 18, 19 un masque M au moyen de la fonction non linéaire f. Le masque M est le résultat de la fonction non linéaire f appliquée à une liste d'arguments e₅,e₆ comme décrit ci-dessus en regard de la figure 2. Le masque M consiste en un nombre déterminé m de bits qui est typiquement égal à une dizaine de bits. Le mode de réalisation suivant lequel le nombre m est égal au nombre de bits du certificat S a pour avantage que le certificat masqué ne révèle strictement aucune information sur la valeur du certificat S ; ceci n'est pas le cas lorsque la longueur m du masque M est plus courte que la longueur du certificat S.

Dans une quatrième étape du procédé, la puce électronique 1 masque 20 la valeur du certificat Sp qu'elle a calculée au moyen du masque M. Dans un premier mode de réalisation, le masquage 20 est calculé au moyen d'une fonction de chiffrement. Une fonction de chiffrement est une fonction bijective paramétrée par une clé qui, à un ensemble de valeurs, fait correspondre un autre ensemble de valeurs ; par exemple la fonction F : x→ x + k modulo 2, avec x=0 ou 1 et k = 0 ou 1, peut être utilisée comme fonction de chiffrement. La fonction de chiffrement peut consister en une opération ou exclusif entre le certificat Sp et le masque M. Le résultat de l'opération de masquage donne la valeur du certificat masquée Spm qui est stockée de manière temporaire dans une mémoire 21 tampon de la puce électronique 1.

Dans une cinquième étape du procédé, l'application effectue une lecture 22 de la mémoire 21 tampon ou la puce 1 vient écrire le certificat masqué Spm dans l'application 2. L'échange entre la puce 1 et l'application 2 peut s'effectuer suivant un protocole similaire à celui utilisé pour l'échange de l'aléa R. L'application 2 vérifie alors la valeur Spm du certificat masqué calculée par la puce 1 en la comparant 23 à la valeur S du certificat qu'elle a elle-même calculée. Pour effectuer la comparaison 23, soit, comme illustré, l'application 2 masque 24 la valeur S du certificat au moyen du masque M pour obtenir la valeur masquée Sm et la comparer 23 à la valeur Spm., soit l'application 2 démasque la valeur Spm en faisant intervenir une fonction inverse du masque M pour obtenir la valeur Sp et la comparer à la valeur S.

Une variante du procédé précédemment décrit en regard des figures 1 et 2 permet avantageusement de remédier à certaines tentatives de fraude consistant à simuler vis à vis d'une puce électronique le comportement d'une application, à l'aide d'une authentification de l'application par la puce électronique. Selon cette variante, des opérations précédemment effectuées par l'application sont effectuées par la puce électronique et vice versa. Ainsi :
- à chaque authentification de l'application, le mot d'entrée variable R appelé aléa est généré, de préférence, par la puce électronique,
- l'application calcule un certificat et, le masque au moyen du masque M pour rendre disponible à la puce électronique uniquement la valeur du certificat masquée,
- l'opération de comparaison des valeurs de certificat calculées d'une part par la puce électronique et, d'autre part par l'application est effectuée par la puce électronique.

L'invention a en outre pour objet une puce électronique destinée à des transactions avec une application, les transactions mettant en oeuvre un procédé selon l'invention. La puce comporte :
- une mémoire non volatile telle une PROM ou une EEPROM pour stocker la première clé secrète K et la seconde clé secrète K',
- un premier circuit électronique tel, un microprocesseur, un circuit logique programmable (EPLD ou PAL selon les terminologies anglo-saxonnes), pour calculer le certificat Sp et pour calculer le masque M,
- des circuits intégrés dans lesquels sont implantées la fonction logique g et la fonction non linéaire f,
- un second circuit électronique tel, un microprocesseur, un circuit logique programmable (EPLD ou PAL selon les terminologies anglo-saxonnes), pour masquer le certificat avec le masque M.

L'invention a en outre pour objet une carte prépayée comportant une telle puce électronique.

L'invention a en outre pour objet un dispositif destiné à des transactions avec de telles puces électroniques, les transactions mettant en oeuvre un procédé selon l'invention. Le dispositif comporte :
- un moyen de mémorisation comprenant les clés secrètes (K, K') des puces électroniques, la fonction logique g et la fonction non linéaire f,
- un moyen de calcul pour calculer le certificat S et pour calculer le masque M,
- un moyen de vérification pour vérifier la valeur masquée Spm du certificat calculé par une puce électronique.

Le dispositif est compris dans un équipement tel, un téléphone public, une borne d'accès à un service public (un tourniquet d'accès à un métro, un tourniquet d'accès à une bibliothèque,...), un parcmètre.

## Revendications

1. Procédé de protection d'une puce électronique (1) d'un utilisateur contre la fraude dans des transactions entre une application (2) et la puce électronique (1) comprenant les étapes consistant :
- à déterminer (3) une fonction logique g connue de l'application (2) et implantée dans la puce électronique (1),
- à attribuer à la puce électronique (1) une première clé secrète K, connue seulement de la puce électronique (1) et de l'application (2), et gardée secrète dans la puce électronique (1),
- à chaque authentification de la puce électronique (1) à générer un mot d'entrée variable R appelé aléa,
- à calculer (16) un certificat Sp par la puce électronique (1) et à calculer (17) un certificat S par l'application (2), chacun des certificats Sp, S étant le résultat de la fonction logique g appliquée à une première liste d'arguments (e₁,e₂) comprenant au moins l'aléa R et la clé secrète K, **caractérisé en ce que** ledit procédé comprend en outre les étapes consistant :
- à déterminer une fonction non linéaire f connue de l'application (2) et implantée dans la puce électronique (1),
- à attribuer à la puce électronique (1) une seconde clé secrète K' connue seulement de la puce électronique (1) et de l'application (2), et gardée secrète (13) dans la puce électronique (1),
- à chaque authentification de la puce électronique (1) à déterminer (18, 19) un masque M au moyen de la fonction non linéaire f appliquée à une deuxième liste d'arguments (e₅,e₆) comprenant au moins une partie de la clé secrète K',
- à masquer (20) la valeur du certificat Sp au moyen du masque M pour rendre disponible à l'application (2) uniquement la valeur du certificat masquée (Spm),
- à vérifier par l'application (2) la valeur masquée (Spm) du certificat calculée par la puce électronique (1).

2. Procédé selon la revendication 1, **caractérisé en ce que** la vérification par l'application (2) de la valeur masquée (Spm) du certificat calculée par la puce électronique (1) consiste :
- à démasquer au moyen du masque M la valeur masquée (Spm) du certificat calculée par la puce électronique (1) et,
- à comparer la valeur du certificat Sp calculée par la puce électronique (1) à celle (S) calculée par l'application (2).

3. Procédé selon la revendication 1, **caractérisé en ce que** la vérification par l'application (2) de la valeur masquée (Spm) du certificat calculée par la puce électronique (1) consiste :
- à masquer (24) au moyen du masque M la valeur du certificat S calculée par l'application (2) et,
- à comparer (23) la valeur masquée du certificat (Spm) calculée par la puce électronique (1) à la valeur masquée du certificat (Sm) calculée par l'application (2).

4. Procédé selon la revendication 1, **caractérisé en ce que** le masquage (20) du certificat Sp au moyen du masque M est calculé au moyen d'une fonction de chiffrement.

5. Procédé selon la revendication 4, **caractérisé en ce que** la fonction de chiffrement est une opération OU Exclusif bit à bit.

6. Procédé selon la revendication 1, **caractérisé en ce que** l'aléa R est déterminé par l'application (2) à partir d'un nombre aléatoire généré par l'application (2) et **en ce que** l'aléa R est transmis à la puce électronique (1) par l'application (2).

7. Procédé selon la revendication 1, **caractérisé en ce que** l'aléa R est déterminé à partir d'une suite d'entiers consécutifs générés par l'application (2) et par la puce électronique (1).

8. Procédé selon la revendication 1, **caractérisé en ce que** chacun des certificats Sp, S et le masque M ont le même nombre de bits.

9. Procédé selon la revendication 1, **caractérisé en ce que** chacun des certificats Sp, S est le résultat de la fonction logique g appliquée à la première liste d'arguments (e₁,e₂) comprenant au moins l'aléa R, la clé secrète K et des données D internes à la puce électronique (1).

10. Procédé selon la revendication 1, **caractérisé en ce que** chacun des certificats Sp, S est le résultat de la fonction logique g appliquée à la première liste d'arguments (e₁,e₂) comprenant au moins l'aléa R, la clé secrète K et des données D' fournies à la puce électronique (1) par l'application (2) lors de l'authentification.

11. Procédé selon la revendication 1, **caractérisé en ce que** la clé secrète K consiste en une séquence de valeurs K[i] et, **en ce que** la fonction logique g déterminant la valeur de chacun des certificats Sp, S consiste en un calcul de produits scalaires modulo 2 entre chacune des valeurs K[i] et les arguments d'entrée autres que la clé K de la fonction logique g.

12. Procédé selon la revendication 1, **caractérisé en ce que** les clés secrètes K et K' sont choisies indépendamment l'une de l'autre.

13. Procédé selon la revendication 1, **caractérisé en ce que** la fonction non linéaire f a en outre comme arguments d'entrée au moins l'aléa R.

14. Procédé selon la revendication 1, **caractérisé en ce que** la fonction non linéaire f a en outre comme arguments d'entrée (e₅,e₆) au moins des données D internes à la puce électronique.

15. Procédé selon la revendication 1, **caractérisé en ce que** la fonction non linéaire f a en outre comme arguments d'entrée (e₅,e₆) au moins des données D' fournies à la puce électronique (1) par l'application (2).

16. Procédé selon la revendication 1, **caractérisé en ce que** la fonction non linéaire f a en outre comme arguments d'entrée (e₅,e₆) au moins un paramètre c dépendant de l'état de la puce électronique (1) au moment de l'authentification.

17. Procédé selon la revendication 16, **caractérisé en ce que** la valeur du paramètre c est calculée à partir d'au moins la valeur d'un compteur contenu dans la puce électronique (1) et incrémenté à chaque authentification.

18. Procédé selon la revendication 16, **caractérisé en ce que** la valeur du paramètre c est calculée à partir, d'au moins la valeur d'un compteur contenu dans la puce électronique (1) et incrémenté à chaque authentification et, de l'aléa R.

19. Procédé selon la revendication 1, **caractérisé en ce que** le nombre d'authentifications de la puce électronique (1) est limité à une valeur maximale V déterminée par l'application (2) et inscrite dans la puce électronique (1).

20. Procédé selon la revendication 19, **caractérisé en ce que** la puce électronique (1) contient un compteur incrémenté à chaque authentification, et que la puce électronique (1) cesse tout calcul d'authentification lorsque la valeur du compteur atteint la valeur maximale V.

21. Procédé de protection d'une puce électronique (1) d'un utilisateur contre la fraude dans des transactions entre une application (2) et la puce électronique (1) comprenant les étapes consistant :
- à déterminer une fonction logique g connue de l'application (2) et implantée dans la puce électronique (1),
- à attribuer à la puce électronique (1) une première clé secrète K, connue seulement de la puce électronique (1) et de l'application (2), et gardée secrète dans la puce électronique (1),
- à chaque authentification de l'application (2) à générer un mot d'entrée variable R appelé aléa,
- à calculer un certificat Sp par la puce électronique (1) et à calculer un certificat S par l'application (2), chacun des certificats Sp, S étant le résultat de la fonction logique g appliquée à une première liste d'arguments (e₁,e₂) comprenant au moins l'aléa R et la clé secrète K, **caractérisé en ce que** ledit procédé comprend en outre les étapes consistant :
- à déterminer une fonction non linéaire f connue de l'application (2) et implantée dans la puce électronique (1),
- à attribuer à la puce électronique (1) une seconde clé secrète K', connue seulement de la puce électronique (1) et de l'application (2), et gardée secrète ( 13) dans la puce électronique (1),
- à chaque authentification de l'application (2) à déterminer (18, 19) un masque M calculé au moyen de la fonction non linéaire f appliquée à au moins une partie de la clé secrète K',
- à masquer la valeur du certificat S au moyen du masque M pour rendre disponible à la puce électronique (1) uniquement la valeur du certificat (Sm) masquée,
- à vérifier par la puce électronique (1) la valeur masquée du certificat (Sm) calculée par l'application (2).

22. Procédé selon la revendication 21, **caractérisé en ce que** l'aléa R est déterminé par la puce électronique (1) à partir d'un nombre aléatoire généré par la puce électronique (1) et **en ce que** l'aléa R est transmis à l'application (2) par la puce électronique (1).

23. Procédé selon la revendication 21, **caractérisé en ce que** l'aléa R est déterminé à partir d'une suite d'entiers consécutifs générés par l'application (2) et par la puce électronique (1).

24. Puce électronique (1) destinée à des transactions avec une application (2), les transactions mettant en oeuvre un procédé selon l'une des revendications 1 à 20, **caractérisée en ce qu'**elle comporte :
- un moyen de mémorisation (13) pour stocker la première clé secrète K et la seconde clé secrète K',
- un moyen de calcul (16,18) pour calculer le certificat Sp et pour calculer le masque M, le certificat étant le résultat de la fonction logique g appliquée à la première liste d'arguments (e₁, e₂) comprenant au moins l'aléa R et la clé secrète K, le masque M étant déterminé au moyen de la fonction non linéaire f appliquée à la deuxième liste d'arguments (e₅, e₆) comprenant au moins une partie de la clé secrète K',
- un moyen électronique (4, 5) dans lequel sont implantées la fonction logique g et la fonction non linéaire f,
- un moyen de masquage (20) pour masquer le certificat avec le masque M.

25. Puce électronique (1) selon la revendication 24, **caractérisée en ce qu'**elle comporte en outre :
- un moyen de comptage du nombre d'authentifications de la puce électronique (1) pour une application donnée (2) pour contrôler la durée d'utilisation de la puce électronique (1).

26. Carte prépayée comportant une puce électronique (1) selon la revendication 24.

27. Dispositif destiné à des transactions avec des puces électroniques (1), les transactions mettant en oeuvre un procédé selon l'une des revendications 1 à 20, **caractérisé en ce qu'**il comporte :
- un moyen de mémorisation dans lequel sont mémorisées les clés secrètes K et K' des puces électroniques, la fonction logique g et la fonction non linéaire f,
- un moyen de calcul pour calculer le certificat S et pour calculer le masque M, le certificat étant le résultat de la fonction logique g appliquée à la première liste d'arguments (e₁, e₂) comprenant au moins l'aléa R et la clé secrète K, le masque M étant déterminé au moyen de la fonction non linéaire f appliquée à la deuxième liste d'arguments (e₅, e₆) comprenant au moins une partie de la clé secrète K'.
- un moyen de vérification pour vérifier la valeur masquée (Spm) du certificat calculé par une puce électronique (1).

28. Téléphone public comportant un dispositif selon la revendication 27.

29. Borne d'accès à un service public comportant un dispositif selon la revendication 27.

30. Parcmètre comportant un dispositif selon la revendication 27.

## Patentansprüche

1. Schutzverfahren eines elektronischen Chips (1) eines Benutzers gegen Betrug bei Transaktionen zwischen einer Anwendung (2) und dem elektronischen Chip (1) mit den folgenden Stufen, bestehend aus:
- Bestimmung (3) einer der Anwendung (2) bekannten und im elektronischen Chip (1) integrierten logischen Funktion g,
- Zuordnung eines ersten, nur dem elektronischen Chip (1) und der Anwendung (2) bekannten und im elektronischen Chip (1) geheim gehaltenen geheimen Schlüssels K zum elektronischen Chip (1),
- Erzeugung eines variablen, Zufallswert genannten Eingangswortes R bei jeder Authentifizierung des elektronischen Chips (1),
- Berechnung (16) eines Zertifikats Sp durch den elektronischen Chip (1) und Berechnung (17) eines Zertifikats S durch die Anwendung (2), wobei jedes Zertifikat Sp, S das Ergebnis der auf eine erste, wenigstens den Zufallswert R und den geheimen Schlüssel K umfassende Liste von Argumenten (e₁, e₂) angewendeten logischen Funktion g ist, **dadurch gekennzeichnet, dass** das genannte Verfahren darüber hinaus die folgenden Stufen umfasst:
- Bestimmung einer nicht linearen, der Anwendung (2) bekannten und im elektronischen Chip (1) integrierten Funktion,
- Zuordnung eines zweiten, nur dem elektronischen Chip (1) und der Anwendung (2) bekannten und im elektronischen Chip (1) geheim gehaltenen geheimen Schlüssels K' zum elektronischen Chip (1),
- Bestimmung (18, 19) einer Maske M mittels der auf eine zweite, wenigstens einen Teil des geheimen Schlüssels K' umfassenden Liste von Argumenten (e5, e6) angewendeten nicht linearen Funktion f bei jeder Authentifizierung des elektronischen Chips (1),
- Verdecken (20) des Wertes des Zertifikats Sp mittels der Maske M, um der Anwendung (2) nur den Wert des verdeckten Zertifikats (Spm) zur Verfügung zu stellen,
- Überprüfen des verdeckten Wertes (Spm) des durch den elektronischen Chip (1) berechneten Zertifikats durch die Anwendung (2).

2. Verfahren gemäß Anspruch 1, **dadurch gekennzeichnet, dass** die Überprüfung des durch den elektronischen Chip (1) berechneten verdeckten Wertes (Spm) des Zertifikats durch die Anwendung (2) auf Folgendem besteht:
- Aufdecken des verdeckten Wertes (Spm) des durch den elektronischen Chip (1) berechneten Zertifikats mittels der Maske M und
- Vergleichen des durch den elektronischen Chip (1) berechneten Wertes des Zertifikats Sp dem (S) durch der Anwendung (2) berechneten Wert.

3. Verfahren gemäß Anspruch 1, **dadurch gekennzeichnet, dass** die Überprüfung durch die Anwendung (2) des verdeckten Wertes (Spm) des durch den elektronischen Chip (1) berechneten Zertifikats aus Folgendem besteht:
- Verdecken (24) des durch die Anwendung (2) berechneten Wertes des Zertifikats S mittels der Maske M und
- Vergleichen (23) des verdeckten Wertes des durch den elektronischen Chip (1) berechneten Zertifikats (Spm) mit dem durch die Anwendung (2) berechneten verdeckten Wert des Zertifikats (Sm).

4. Verfahren gemäß Anspruch 1, **dadurch gekennzeichnet**, das das Verdecken (20) des Zertifikats Sp mittels der Maske M mittels einer Chiffrierungsfunktion berechnet wird.

5. Verfahren gemäß Anspruch 4, **dadurch gekennzeichnet, dass** die Chiffrierungsfunktion eine exklusive ODER-Operation von Bit zu Bit ist.

6. Verfahren gemäß Anspruch 1, **dadurch gekennzeichnet, dass** der Zufallswert R durch die Anwendung (2) ausgehend von einer durch die Anwendung (2) erzeugte zufälligen Zahl bestimmt wird und dass der Zufallswert R durch die Anwendung (2) auf den elektronischen Chip (1) übertragen wird.

7. Verfahren gemäß Anspruch 1, **dadurch gekennzeichnet, dass** der Zufallswert R ausgehend von einer Folge von der Anwendung (2) und dem elektronischen Chip (1) erzeugten aufeinander folgenden ganzen Zahlen bestimmt wird.

8. Verfahren gemäß Anspruch 1, **dadurch gekennzeichnet, dass** jedes Zertifikat Sp, S und die Maske M dieselbe Anzahl von Bits haben.

9. Verfahren gemäß Anspruch 1, **dadurch gekennzeichnet**, das jedes Zertifikat Sp, S das Ergebnis der auf die erste, wenigstens den Zufallswert R, den geheimen Schlüssel K und die internen Daten D des elektronischen Chips (1) umfassende Liste von Argumenten (e₁, e₂) angewendeten logischen Funktion g ist.

10. Verfahren gemäß Anspruch 1, **dadurch gekennzeichnet**, das jedes Zertifikat Sp, S das Ergebnis der auf die erste, wenigstens den Zufallswert R, den geheimen Schlüssel K und die dem elektronischen Chip (1) durch die Anwendung (2) bei der Authentifizierung gelieferten Daten D' umfassende Liste von Argumenten (e₁, e₂) anwendeten logischen Funktion g ist.

11. Verfahren gemäß Anspruch 1, **dadurch gekennzeichnet, dass** der geheime Schlüssel K aus einer Folge von Werten K[i] besteht und dass die den Wert jedes Zertifikats Sp, S bestimmende logische Funktion g aus einer Berechnung von skalaren Produkten Modulo 2 zwischen jedem Wert K[i] und den Eingangsargumenten mit Ausnahme des Schlüssels K der logischen Funktion g besteht.

12. Verfahren gemäß Anspruch 1, **dadurch gekennzeichnet, dass** die geheimen Schlüssel K und K' unabhängig voneinander gewählt werden.

13. Verfahren gemäß Anspruch 1, **dadurch gekennzeichnet, dass** die nicht lineare Funktion f darüber hinaus wenigstens den Zufallswert R als Eingangsargument hat.

14. Verfahren gemäß Anspruch 1, **dadurch gekennzeichnet, dass** die nicht lineare Funktion f darüber hinaus wenigstens die internen Daten des elektronischen Chips als Eingangsargumente (e₅, e₆) hat.

15. Verfahren gemäß Anspruch 1, **dadurch gekennzeichnet, dass** die nicht lineare Funktion f darüber hinaus wenigstens die dem elektronischen Chip (1) durch die Anwendung (2) gelieferten Daten D' als Eingangsargumente (e₅, e₆) hat.

16. Verfahren gemäß Anspruch 1, **dadurch gekennzeichnet, dass** die nicht lineare Funktion f darüber hinaus wenigstens einen vom Zustand des elektronischen Chips (1) zum Zeitpunkt der Authentifizierung abhängigen Parameter c als Eingangsargumente (e₅, e₆) hat.

17. Verfahren gemäß Anspruch 16, **dadurch gekennzeichnet, dass** der Wert des Parameters c ausgehend wenigstens vom Wert eines im elektronischen Chip (1) enthaltenen und bei jeder Authentifizierung inkrementierten Zählers berechnet wird.

18. Verfahren gemäß Anspruch 16, **dadurch gekennzeichnet, dass** der Wert des Parameters c ausgehend wenigstens vom Wert eines im elektronischen Chip (1) enthaltenen und bei jeder Authentifizierung inkrementierten Zählers und des Zufallswertes R berechnet wird.

19. Verfahren gemäß Anspruch 1, **dadurch gekennzeichnet, dass** die Zahl der Authentifizierungen des elektronischen Chips (1) auf einen durch die Anwendung (2) bestimmten und im elektronischen Chip (1) eingeschriebenen maximalen Wert V beschränkt ist.

20. Verfahren gemäß Anspruch 19, **dadurch gekennzeichnet, dass** der elektronische Chip (1) einen bei jeder Authentifizierung inkrementierten Zähler beinhaltet und dass der elektronische Chip (1) jede Authentifizierungsberechnung beendet, wenn der Wert des Zählers den maximalen Wert V erreicht.

21. Schutzverfahren eines elektronischen Chips (1) eines Benutzers gegen Betrug bei Transaktionen zwischen einer Anwendung (2) und einem elektronischen Chip (1) mit den folgenden Stufen, bestehend aus:
- Bestimmung einer der Anwendung (2) bekannten und im elektronischen Chip (1) integrierten logischen Funktion g,
- Zuordnung eines ersten, nur dem elektronischen Chip (1) und der Anwendung (2) bekannten und im elektronischen Chip (1) geheim gehaltenen geheimen Schlüssels K zum elektronischen Chip (1),
- Erzeugung eines variablen, Zufallswert genannten Eingangswortes R bei jeder Authentifizierung der Anwendung (2),
- Berechnung eines Zertifikats Sp durch den elektronischen Chip (1) und Berechnung eines Zertifikats S durch die Anwendung (2), wobei jedes Zertifikat Sp, S das Ergebnis der auf eine erste, wenigstens den Zufallswert R und den geheimen Schlüssel K umfassende Liste von Argumenten (e₁, e₂) angewendete logischen Funktion g ist, **dadurch gekennzeichnet, dass** das genannte Verfahren darüber hinaus die folgenden Stufen umfasst, bestehend aus:
- Bestimmung einer nicht linearen, der Anwendung (2) bekannten und im elektronischen Chip (1) integrierten Funktion f,
- Zuordnung eines zweiten, nur dem elektronischen Chip (1) und der Anwendung (2) bekannten und im elektronischen Chip (1) geheim gehaltenen (13) geheimen Schlüssels K' zum elektronischen Chip (1),
- Bestimmung (18, 19) einer mittels der wenigstens auf einen Teil des geheimen Schlüssels K' angewendeten nicht linearen Funktion f berechneten Maske M bei jeder Authentifizierung der Anwendung (2),
- Verdecken des Wertes des Zertifikats S mittels der Maske M, um dem elektronischen Chip (1) nur den verdeckten Wert des Zertifikats (Sm) zur Verfügung zu stellen,
- Überprüfung des durch die Anwendung (2) berechneten verdeckten Wertes des Zertifikats (Sm) durch den elektronischen Chip (1).

22. Verfahren gemäß Anspruch 21, **dadurch gekennzeichnet, dass** der Zufallswert R durch den elektronischen Chip (1) ausgehend von einer durch den elektronischen Chip (1) erzeugten zufälligen Zahl bestimmt wird und dass der Zufallswert R durch den elektronischen Chip (1) auf die Anwendung (2) übertragen wird.

23. Verfahren gemäß Anspruch 21, **dadurch gekennzeichnet, dass** der Zufallswert R ausgehend von einer Folge von durch die Anwendung (2) und den elektronischen Chip (1) erzeugter aufeinander folgenden ganzen Zahlen bestimmt wird.

24. Für Transaktionen mit einer Anwendung (2) bestimmter elektronischer Chip (1), wobei die Transaktionen ein Verfahren gemäß Anspruch 1 bis 20 umsetzen, **dadurch gekennzeichnet, dass** er Folgendes umfasst:
- Ein Speichermittel (13) zum Speichern des ersten geheimen Schlüssels K und des zweiten geheimen Schlüssels K';
- Ein Berechnungsmittel (16, 18) zum Berechnen des Zertifikats Sp und zum Berechnen der Maske M, wobei das Zertifikat das Ergebnis der auf die erste wenigstens den Zufallswert R und den geheimen Schlüssel K umfassende Liste von Argumenten (e₁, e₂) angewendete logischen Funktion g ist, wobei die Maske M mittels der auf die zweite, wenigstens einen Teil des geheimen Schlüssels K' umfassende Liste von Argumenten (e₅, e₆) angewendete nicht linearen Funktion f bestimmt wird,
- ein elektronisches Mittels (4, 5), in das die logische Funktion g und die nicht lineare Funktion f integriert sind,
- ein Maskierungsmittel (20) zum Verdecken des Zertifikats mit der Maske M.

25. Elektronischer Chip (1) gemäß Anspruch 24, **dadurch gekennzeichnet, dass** er darüber hinaus Folgendes umfasst:
- Ein Zählmittel der Anzahl von Authentifizierungen des elektronischen Chips (1), für eine vorgegebene Anwendung (2) zum Kontrollieren der Nutzungsdauer des elektronischen Chips (1).

26. Vorausbezahlte Karte mit einem elektronischen Chip (1) gemäß Anspruch 24.

27. Für Transaktionen mit elektronischen Chips (1) bestimmte Vorrichtung, wobei die Transaktionen ein Verfahren gemäß Anspruch 1 bis 20 umsetzen, **dadurch gekennzeichnet, dass** sie Folgendes umfasst:
- ein Speichermittel, in dem die geheimen Schlüssel K und K' der elektronischen Chips, die logische Funktion g und die nicht lineare Funktion f gespeichert sind,
- ein Berechnungsmittel zur Berechnung des Zertifikats S und zur Berechnung der Maske M, wobei das Zertifikat das Ergebnis der auf die erste, wenigstens den Zufallswert R und den geheimen Schlüssel K umfassende Liste von Argumenten (e₁, e₂) angewendeten logischen Funktion g ist, wobei die Maske M mittels der auf die zweite, wenigstens einen Teil des geheimen Schlüssels K' umfassende Liste von Argumenten (e₅, e₆) angewendete nicht linearen Funktion f bestimmt wird,
- ein Überprüfungsmittel zur Überprüfung des verdeckten Wertes (Spm) des durch einen elektronischen Chip (1) berechneten Zertifikats.

28. Öffentliches Telefon mit einer Vorrichtung gemäß Anspruch 27.

29. Zugangsbeschränkung zu einer öffentlichen Leistung mit einer Vorrichtung gemäß Anspruch 27.

30. Parameter mit einer Vorrichtung gemäß Anspruch 27.

## Claims

1. A method of protecting an electronic chip (1) of a user against fraud in transactions between an application (2) and the electronic chip (1), the method comprising the following steps:
- determining (3) a logic function g known to the application (2) and implanted (4) in the electronic chip (1),
- allocating to the electronic chip (1) a first secret key K, known only to the electronic chip (1) and to the application (2), and kept secret (13) in the electronic chip (1),
- on each authentication of the electronic chip (1), generating a variable input word R referred to as a seed,
- computing by the electronic chip (1) a certificate Sp and computing (17) by the application (2) a certificate S, each of the certificate is the result of applying the logic function g to a first list of arguments (e₁, e₂) comprising at least the random seed R and the secret key K,
which method is **characterized in that** it further comprises the following steps:
- determining a non-linear function f known to the application (2) and implanted in the electronic chip (1),
- allocating to the electronic chip (1) a second secret key K' known only to the electronic chip (1) and to the application (2) and kept secret (13) in the electronic chip (1),
- on each authentication of the electronic chip (1), determining (18, 19) a mask M by applying the non-linear function f to a second list of arguments (e₅, e₆) comprising at least a portion of the secret key K',
- masking (20) the value of the certificate Sp by means of the mask M to make available to the application (2) only the masked value of the certificate (Spm), and
- using the application (2) to verify the masked value of the certificate (Spm) computed by the electronic chip (1).

2. A method according to claim 1, **characterized in that** verification by the application (2) of the masked value of the certificate (Spm) computed by the electronic chip (1) consists in:
- using the mask M to unmask the masked value of the certificate (Spm) computed by the electronic chip (1), and
- comparing the value of the certificate (Sp) computed by the electronic chip (1) with that (S) computed by the application (2).

3. A method according to claim 1, **characterized in that** verification by the application (2) of the masked value of the certificate (Spm) computed by the electronic chip (1) consists in:
- using the mask M to mask (24) the value of the certificate S computed by the application (2), and
- comparing (23) the masked value of the certificate (Sp) computed by the electronic chip (1) with the masked value of the certificate (Sm) computed by the application (2).

4. A method according to claim 1, **characterized in that** the masking (20) of the certificate (Sp) by means of the mask M is computed by means of an encryption function.

5. A method according to claim 4, **characterized in that** the encryption function is an exclusive-OR operation applied bit by bit.

6. A method according to claim 1, **characterized in that** the seed R is determined by the application (2) from a random number generated by the application (2) and **in that** the seed R is transmitted to the electronic chip (1) by the application (2).

7. A method according to claim 1, **characterized in that** the seed R is determined from a series of consecutive integers generated by the application (2) and by the electronic chip (1).

8. A method according to claim 1, **characterized in that** each of the certificate Sp, S and the mask M have the same number of bits.

9. A method according to claim 1, **characterized in that** each of the certificate Sp, S is the result of applying the logic function g to a first.list of arguments (e₁, e₂) comprising at least the seed R, the secret key K, and data D internal to the electronic chip (1).

10. A method according to claim 1, **characterized in that** each of the certificate Sp, S is the result of applying the logic function g to the first list of arguments (e₁, e₂) comprising at least the seed R, the secret key K, and data D' supplied to the electronic chip (1) by the application (2) at the time of authentication.

11. A method according to claim 1, **characterized in that** the secret key K consists of a sequence of values K[i] and **in that** the logic function g determining the value of each of the certificate Sp, S consists in computing modulo 2 scalar products of each of the values K[i] and the input arguments other than the key K of the logic function g.

12. A method according to claim 1, **characterized in that** the secret keys K and K' are chosen independently of each other.

13. A method according to claim 1, **characterized in that** the non-linear function f further has as input arguments at least the seed R.

14. A method according to claim 1, **characterized in that** the non-linear function f further has as input arguments (e₅, e₆) at least data D internal to the electronic chip.

15. A method according to claim 1, **characterized in that** the non-linear function f further has as input arguments (e₅, e₆) at least data D' supplied to the electronic chip (1) by the application (2).

16. A method according to claim 1, **characterized in that** the non-linear function f further has as input arguments (e₅, e₆) at least one parameter c depending on the state of the electronic chip (1) at the time of authentication.

17. A method according to claim 16, **characterized in that** the value of the parameter c is computed from at least the value of a counter in the electronic chip (1) which is incremented on each authentication.

18. A method according to claim 16, **characterized in that** the value of the parameter c is computed from at least the seed R and the value of a counter in the electronic chip (1) which is incremented on each authentication.

19. A method according to claim 1, **characterized in that** the number of authentications of the electronic chip (1) is limited to a maximum value V determined by the application (2) and written into the electronic chip (1).

20. A method according to claim 14, **characterized in that** the electronic chip (1) contains a counter which is incremented on each authentication and **in that** the electronic chip (1) terminates all authentication computation if the value of the counter reaches the maximum value V.

21. A method of protecting an electronic chip (1) of an user against fraud in transactions between an application (2) and the electronic chip (1), the method comprising the following steps:
- determining a logic function g known to the application (2) and implanted (4) in the electronic chip (1) ,
- allocating to the electronic chip (1) a first secret key K, known only to the electronic chip (1) and to the application (2), and kept secret (13) in the electronic chip (1),
- on each authentication of the application (2,), generating an input word R referred to as a random seed,
- computing by the electronic chip (1) a certificate Sp and computing by the application (2) a certificate S which is the result of applying the logic function g to a first list of arguments (e₁, e₂) comprising at least the seed R and the secret key K,
which method is **characterized in that** it further comprises the following steps:
- determining a non-linear function f known to the application (2) and implanted in the electronic chip (1),
- allocating to the electronic chip (1) a second secret key K' known only to the electronic chip (1) and to the application (2) and kept secret (13) in the electronic chip (1),
- on each authentication of the application (2), determining (18, 19) a mask M computed by applying the non-linear function f to at least a portion of the secret key K',
- masking the value of the certificate S by means of the mask M to make available to the electronic chip (1) only the masked value of the certificate (Sm), and
- using the electronic chip (1) to verify the masked value of the certificate (Sm) computed by the application (2).

22. A method according to claim 21, **characterized in that** the seed R is determined by the electronic chip (1) from a random number generated by the electronic chip (1) and **in that** the seed R is transmitted to the application (2) by the electronic chip (1).

23. A method according to claim 21, **characterized in that** the seed R is determined from a series of consecutive integers generated by the application (2) and by the electronic chip (1).

24. An electronic chip (1) intended for transactions with an application (2), the transactions using a method according to any one of claims 1 to 20, which electronic chip is **characterized in that** it comprises:
- memory means (13) for storing the first secret key K and the second secret key K',
- computation means (16, 18) for computing the certificate (Sp) and for computing the mask M, certificate is the result of applying the logic function g to a first list of arguments (e₁, e₂) comprising at least the random seed R and the secret key K, the mask M is determined by applying the non-linear function f to a second list of arguments (e₅, e₆) comprising at least a portion of the secret key K',
- electronic means (4, 5) in which are implanted the logic function g and the non-linear function f, and
- masking means (20) for masking the certificate with the mask M.

25. An electronic chip (1) according to claim 24, **characterized in that** it further comprises:
- means for counting the number of authentications of the electronic chip (1) for a given application (2) in order to monitor the duration of use of the electronic chip (1).

26. A prepaid card including an electronic chip (1) according to claim 24.

27. A device intended for transactions with electronic chips (1), the transactions using a method according to any one of claims 1 to 20, which device is **characterized in that** it comprises:
- memory means for storing the secret keys K, K' of the electronic chips, the logic function g and the non-linear function f,
- computation means for computing the certificate (S) and for computing the mask M, certificate is the result of applying the logic function g to a first list of arguments (e₁, e₂) comprising at least the random seed R and the secret key K, the mask M is determined by applying the non-linear function f to a second list of arguments (e₅, e₆) comprising at least a portion of the secret key K' and
- verification means for verifying the masked value of the certificate (Spm) computed by an electronic chip (1).

28. A public telephone incorporating a device according to claim 27.

29. A point of access to a public service incorporating a device according to claim 27.

30. A parking meter incorporating a device according to claim 27.
